# EUROPEAN PATENT APPLICATION

(11) **EP 2 799 219 A1**
(43) Date of publication of application: **05.11.2014**
(21) Application number: 12861268.6
(22) Date of filing: 28.12.2012
(51) Int. Cl.: B29D 30/26, B29D 30/30

(54) **BELT LAYER FEEDING FRAME AND FEEDING METHOD THEREOF**

(30) Priority: 31.12.2011 CN 201110456755
(71) Applicant: Yuan, Zhongxue, Qingdao, Shandong 266042 (CN)
(72) Inventor: LIU, Yingjie, Shandong 266042 (CN); CHENG, Jiguo, Shandong 266042 (CN); ZHANG, Chuanzhi, Shandong 266042 (CN); FAN, Leiting, Shandong 266042 (CN); YUAN, Zhongxue, Shandong 266042 (CN)
(74) Representative: Intès, Didier Gérard André
(86) International application number: PCT/CN2012/087902
(87) International publication number: WO 2013/097780

(57) **Abstract**

Said belt ply feeding support and a feeding method thereof comprise: when a belt ply is conveyed to the front end of a conveying forming board, a force is exerted by a perpendicular adjustment device to drive a conveying forming board bracket to swing upward and rotate around a pivot shaft of a rack to positions at which the upper surface of the conveying forming board is tangential to the periphery of a belt ply drum. According to this arrangement, the belt ply is tangential to the belt ply drum all the time and a belt ply is in firm contact with a belt ply drum regardless of the size of the belt ply drum when wrapping the belt ply around the belt ply drum. Accordingly, the quality of tire forming can be improved.

## Description

### FIELD OF THE DISCLOSURE

The invention relates to a belt ply feeding support and a feeding method thereof applicable to the manufacture of tire and belongs to the field of rubber mechanism

### BACKGROUND OF THE DISCLOSURE

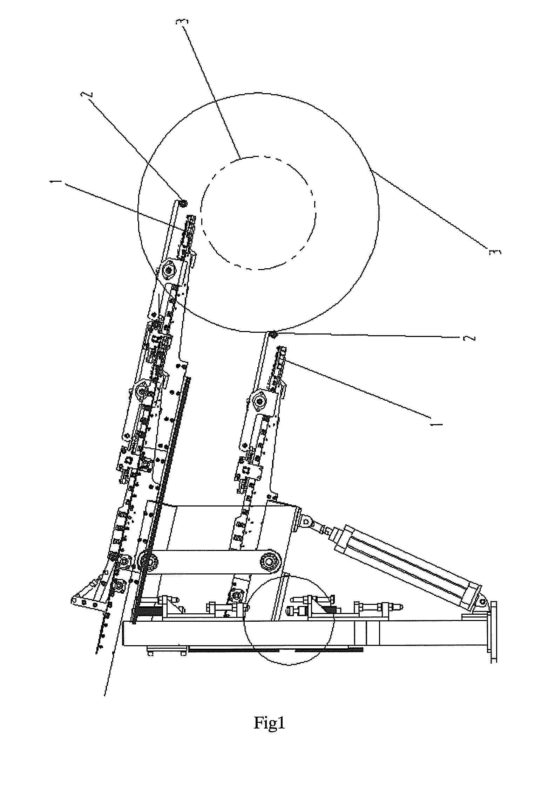

FIG. 1 is a schematic diagram of a belt ply feeding support in the prior art. A belt ply is positioned on a conveying forming board 1 and the belt ply is conveyed to wrap around a belt ply drum 3 from the left side. In the process of wrapping, an pressing roller, 2, falls down to enable the belt ply to be uniformly wrapped around the belt ply drum. As shown in the FIG. 1, the belt ply is not tangential to the belt ply drum regardless of the size of the belt ply drum and the front end of the conveying forming board and a gap is left between the front end of the conveying forming board and the belt ply drum. Accordingly, the positions of the head and the tail of the belt ply on the belt ply drum are inaccurate in wrapping and the effect of wrapping the belt ply around the belt ply drum is not good, so the quality of building tires are influenced.

### CONTENTS OF THE INVENTION

The invention aims at providing a belt ply feeding support and a feeding method thereof to maintain a belt ply being tangential to a belt ply drum in wrapping the belt ply around the belt ply drum regardless of the size of belt ply drum so as to ensure the belt ply is in firm contact with the belt ply drum.

In order to achieve said objectives, the belt ply feeding support is characterized in that the belt ply feeding support comprises a rack and a conveying forming board bracket which is mounted on the rack, wherein the conveying forming board bracket is pivoted to the rack. The conveying forming board is positioned on the conveying forming board bracket and inclines downward along the conveying direction of the belt ply. The conveying forming board is provided with a front end which is attached to the belt ply drum. The conveying forming board is characterized in that the front end of the conveying forming board is positioned below the belt ply drum and the upper surface of the conveying forming board is tangential to the outer circumference of the belt ply drum when the conveying forming board in the work position of attaching.

In order to enable the conveying forming board to enter the work position of attaching, the rack is typically provided with a perpendicular adjustment device which drives the front end of the conveying forming board to swing longitudinally and a pivot point for the longitudinal swing of the conveying forming board bracket. The extreme position of the conveying forming board in swinging upward is the work position of attaching of the conveying forming board.

Said pivot point is typically the pivot shaft at which the rack is pivoted to the conveying forming board bracket; said perpendicular adjustment device comprises inclined plane tracks mounted on the rack and sliding blocks which can slide on the inclined plane tracks. Therefore, longitudinal swing of the front end of the conveying forming board can be achieved by enabling the sliding blocks to slide on the inclined plane tracks.

Improvements adopted in said invention are described as follows:
The conveying forming board bracket is provided with a first front conveying forming board, a second front conveying forming board, wherein the transverse spacing between the first front conveying forming board and the second front conveying forming board is not less than the transverse widths of the first front conveying forming board and the second front conveying forming board. The transverse spacing between the first front conveying forming board and the second front conveying forming board corresponds to the position of the belt ply drum.

The transverse spacing between the first front conveying forming board and the second front conveying forming board is the work position of attaching. The first front conveying forming board and the second front conveying forming board enter into the transverse spacing in sequence to enable the belt ply conveyed to be wrapped around the belt ply drum. In order to enable the first front conveying forming board and the second front conveying forming board to enter into the transverse spacing in sequence, the conveying forming board is provided with slide tracks and the first front conveying forming board and the second front conveying forming board are connected in a driving manner by the slide tracks and the driving mechanism.

The structural scheme of the belt ply feeding support provided by the invention is listed above. According to this arrangement, the belt ply is conveyed by the conveying forming board and wrapped around the belt ply drum. The belt ply feeding support is characterized in that the front end of the conveying forming board is positioned below the belt ply drum; when the belt ply is conveyed to the front end of the conveying forming board, a force is exerted by a perpendicular adjustment device to drive the conveying forming board bracket to swing upward and rotate around a pivot shaft of the rack to positions at which the upper surface of the conveying forming board is tangential to the outer circumference of a belt ply drum.

The perpendicular adjustment device comprises inclined plane tracks which are arranged on the rack and sliding blocks which are capable of sliding on the inclined plane tracks. Longitudinal swing of the front end of the conveying forming board bracket can be achieved by enabling the sliding blocks to slide on the inclined plane tracks.

Improvements adopted in said invention are described as follows:
The conveying forming board bracket is provided with a first front conveying forming board, a second front conveying forming board, wherein the transverse spacing between the first front conveying forming board and the second front conveying forming board is not less than the transverse widths of the first front conveying forming board and the second front conveying forming board. The transverse spacing between the first front conveying forming board and the second front conveying forming board corresponds to the position of the belt ply drum. The first front conveying forming board and the second front conveying forming board enter into the transverse spacing in sequence to enable the belt ply conveyed to enter the work position of attaching and wrap around the belt ply drum.

Said conveying forming board bracket is provided with slide tracks, and the first front conveying forming board and the second front conveying forming board are capable of sliding on the slide tracks to enter into and exit from the transverse spacing.

In summary, according to the belt ply feeding support and the feeding method thereof, the belt ply is tangential to the belt ply drum all the time and a belt ply is in firm contact with a belt ply drum regardless of the size of the belt ply drum when wrapping the belt ply around the belt ply drum, and accordingly, the quality of tire forming can be improved.

### BRIEF DESCRIPTION OF THE DRAWINGS

FIG. 1 is a schematic diagram of a feeding support in the prior art.
FIG. 2 is a main view of the belt ply feeding support of the present invention.
FIG. 3 is a vertical view of the belt ply feeding support of the present invention.

As shown in the FIG.1, FIG. 2, and FIG 3, graphical representations are the conveying forming board 1, the assembly roller 2, and the belt ply drum 3; the rack 40, the conveying forming board bracket 41, the pivot shaft 42, the sliding block 43, the track 44; the slide track 50, the first front conveying forming board 51, the second front conveying forming board 52, the first rear conveying forming board 53, the second rear conveying forming board 54, a first centering device 55, a second centering device 56, a first cutting device 57, a second cutting device 58.

### DETAILED DESCRIPTION:

### Embodiment 1:

FIG. 1 is a schematic diagram of a feeding support in the prior art. Said belt ply is positioned on a conveying forming board 1 and the belt ply is conveyed to the belt ply drum 3 from the left side and is wrapped around the belt ply drum 3. A pressing roller falls down to enable the belt ply uniformly wrap around the belt ply drum. As shown in the FIG. 1, the belt ply is not tangential to the belt ply drum regardless of the size of the belt ply drum and a gap is left between the front end of the conveying forming board and the belt ply drum.

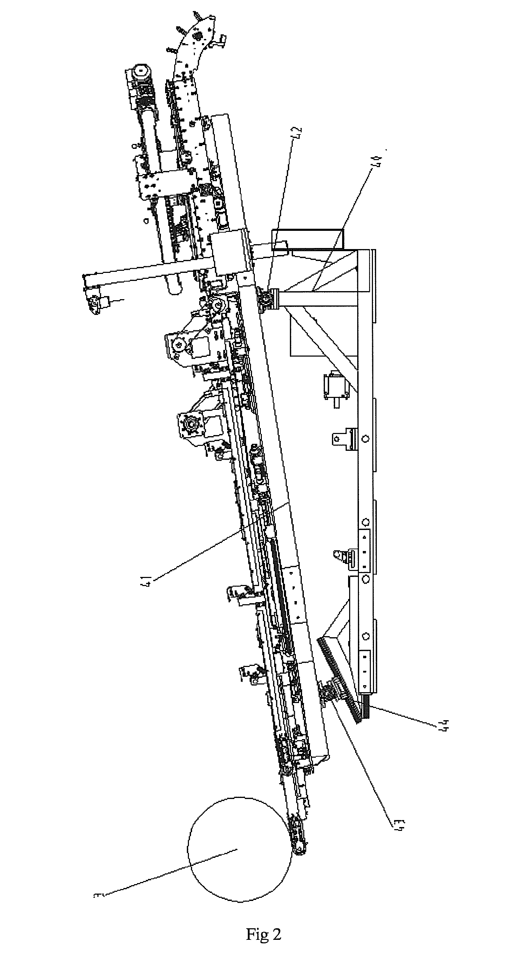

As shown in the FIG. 2, a belt ply feeding support in the preset invention comprises a rack 40 and a belt ply feeding support bracket 41 arranged on the rack 40. The belt ply feeding support bracket 41 is pivoted to the rack 40 through a pivot shaft 42, tracks 44 inclining upward are positioned on the right side of the rack 40, sliding blocks 43 are mounted on the right side of the conveying forming board bracket 41 and the sliding blocks 43 are capable of sliding upward along the tracks 44. When the sliding blocks 43 sliding upward along the tracks 44, the conveying forming board bracket 41 rotates around the pivot shaft 42, the front end of the conveying forming board bracket 41 swings upward to enable the conveying forming board which is arranged on the conveying forming board bracket 41 to swing upward to a position at which the conveying forming board is attached to the lower surface of the belt ply drum; when the sliding blocks 43 sliding downward along the tracks 44, the conveying forming board is separated from the belt ply drum.

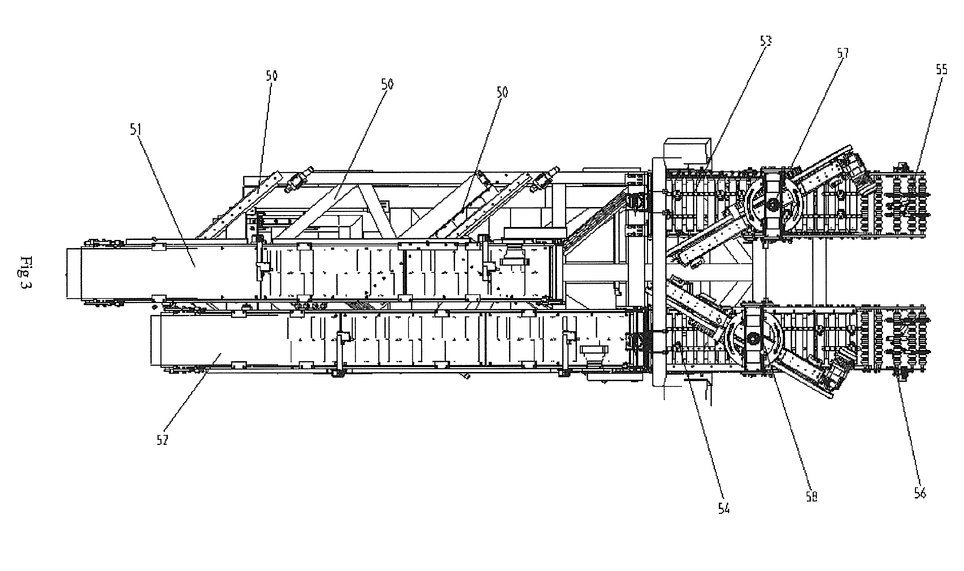

As shown in the FIG.3, the first front conveying forming board 51 and the second front conveying forming board 52 are respectively arranged on each side of the conveying forming board bracket 41. The conveying forming board bracket 41 is provided with the slide track 50. The first front conveying forming board 51 and the second front conveying forming board 52 are capable of sliding to the middle part of the conveying forming board, namely the transverse spacing between the first front conveying forming board and the second front conveying forming board, along the slide track 50 so as to enter the work position of attaching and convey the belt ply conveyed and wrap the belt ply conveyed around the belt ply drum.

The detailed feeding method of the belt ply feeding support adopted in the present embodiment is described as follows.

Said belt ply support in the present embodiment comprises two conveying forming boards, and therefore, two belt plies can be conveyed simultaneously. The belt plies are winded off by a winding-off device to enter into the first rear conveying forming board 53 and the second rear conveying forming board 54, wherein the first rear conveying forming board and the second rear conveying forming board adopt the roller-type conveyance. The belt plies firstly pass through the first centering device 55 and the second centering device 56 to be mechanically centered, and then are lengthened by a length measuring device in the process of moving forward. When the lengths of the belt plies are met with the preset length of the system, the belt plies are cut by the first cutting device 57 and the second cutting device 58, and then conveyed forward to enter into the first front conveying forming board 51 and the second front conveying forming board 52. When the belt plies are conveyed to the front end of the conveying forming board, the first front conveying forming board 51 is driven by a driving mechanism to slide upward to the middle part of the conveying forming board bracket 41 along the slide tracks 50 as shown in the FIG. 3. Then the sliding blocks 43 arranged on the right side of the conveying forming board bracket 41 slides upward along the tracks 44 so as to enable the conveying forming board bracket 41 to rotate around the pivot shaft 42 and swing upward, and accordingly, the belt plies which are conveyed to the front end of the first front conveying forming board 51 are wrapped around the belt ply drum under the effect of the conveyance through the first front conveying forming board 51 and the rotation of the belt ply drum. Upon completion of wrapping, the first front conveying forming board 51 exists from the middle part of the conveying forming board bracket 41 and the sliding block 43 positioned at the right end of the conveying forming board bracket 41 slides downward to enable the conveying forming board bracket 41 to rotate around the pivot shaft 42 and swing downward to the original position. Then the second conveying forming board 52 enters into the middle part of the conveying forming board bracket 41 along the slide tracks and enable the belt ply to be wrapped around the belt ply drum according to the procedures listed above. Then the second conveying forming board 52 exists from the middle part of the conveying forming board bracket 41 and the conveying forming board bracket 41 swings downward back to the original position.

In summary, the present embodiment combining with the drawings only describes a preferred embodiment of said invention. According to the preferred embodiment, technicians in said field are capable of being inspired to directly produce alternative structures fit for the design conception of the present invention. Accordingly, alternative structural features based on the present invention shall belong to the field of said disclosure of the present invention.

## Claims

1. A belt ply feeding support comprising a rack (40) and a conveying forming board bracket (41) which is arranged on the rack (40), A conveying forming board which inclines downward along the conveyance direction of the belt ply is arranged on the conveying forming board bracket (41) and the conveying forming board is provided with a front end which is attached to the belt ply drum, the conveying forming board being **characterized in that**:
1) the front end of the conveying forming board is positioned below the belt ply drum;
2) the upper surface of the conveying forming board is tangential to the outer circumference of the belt ply drum when the conveying forming board in a work position of attaching.

2. A belt ply feeding support according to claim 1, said belt ply feeding support being **characterized in that** a rack (40) is provided with a perpendicular adjustment device which is capable of driving the front end of the conveying forming board bracket (41) to swing longitudinally and a pivot point for the longitudinal swing of the conveying forming board bracket (41).

3. A belt ply feeding support according to claim 2, said belt ply feeding support being **characterized in that** the pivot point is a pivot shaft (42) which is positioned at the pivot connection end between the rack (40) and the conveying forming board bracket (41), The perpendicular adjustment device comprises inclined plane tracks (44) arranged on the rack (40) and a sliding block (43) which is capable of sliding on the inclined plane tracks (44).

4. A belt ply feeding support according to claim 1, said belt ply feeding support being **characterized in that** the conveying forming board bracket (41) is provided with a first front conveying forming board (51), a second front conveying forming board (52), wherein the transverse spacing between the first front conveying forming board and the second front conveying forming board is not less than the transverse widths of the first front conveying forming board and the second front conveying forming board, and the transverse spacing corresponds to the position of the belt ply drum.

5. A belt ply feeding support according to claim 4, said belt ply feeding support being **characterized in that** the conveying forming board bracket (41) is provided with sliding tracks (50), a first front conveying forming board (51), a second front conveying forming board (52) which are connected with the sliding tracks (50) in a sliding manner by a driving mechanism.

6. A feeding method for a belt ply feeding support according to any of claim 1 to claim 5, wherein a belt ply is conveyed and wrapped around the belt ply drum by the conveying forming board through adopting the belt ply feeding support, **characterized in that** the front end of the conveying forming board is arranged below the belt ply drum, when a belt ply is conveyed to the front end of the conveying forming board, a force is exerted by a perpendicular adjustment device to drive the front end of the conveying forming board bracket (41) to swing upward and rotate around a pivot shaft (42) of the rack to positions at which the upper surface of the conveying forming board is tangential to the outer circumference of a belt ply drum.

7. A feeding method according to the claim 6, said feeding method of the belt ply feeding support being **characterized in that** the longitudinal swing of the front end of the conveying forming board bracket (41) can be achieved through that sliding blocks (43) of the perpendicular adjustment device slide on the inclined plane tracks (44).

8. A feeding method according to the claim 6, said feeding method of the belt ply feeding support being **characterized in that** the conveying forming board bracket is provided with a first front conveying forming board (51), a second front conveying forming board (52), wherein the transverse spacing between the first front conveying forming board and the second front conveying forming board is not less than the transverse widths of the first front conveying forming board and the second front conveying forming board, The transverse spacing between the first front conveying forming board and the second front conveying forming board corresponds to the position of the belt ply drum, Therefore, the belt ply are conveyed to the work position of attaching by enabling the first front conveying forming board (51) and the second front conveying forming board (52) to enter the transverse spacing in sequence.

9. A feeding method for a belt ply feeding support according to claim 5, said feeding method being **characterized in that** the conveying forming board bracket is provided with sliding tracks (50), and the first front conveying forming board (51) and the second front conveying forming board (52) are capable of entering into or exiting from the transverse spacing by sliding on the slide tracks (50).
